# EUROPEAN PATENT APPLICATION

(11) **EP 1 568 764 A1**
(43) Date of publication of application: **31.08.2005**
(21) Application number: 03774065.1
(22) Date of filing: 19.11.2003
(51) Int. Cl.: C12M 1/00, C12M 3/00, C12N 15/00, G01N 33/48

(54) **BIOCHEMICAL CONTAINER**

(30) Priority: 29.11.2002 JP 2002347806
(71) Applicant: Nippon Sheet Glass Company, Limited, Tokyo 105-8552 (JP)
(72) Inventor: FUJITA, Koji, Tokyo 105-8552 (JP)
(74) Representative: Petersen, Frank
(86) International application number: PCT/JP2003/014759
(87) International publication number: WO 2004/050821

(57) **Abstract**

In order to provide a biochemical vessel suitable for use in effective cell culture, precision analysis, etc., in a biochemical vessel comprising a plate-like body (A) defining a plurality of through holes (1) along a thickness thereof, and a substrate (B) bonded to one face of the plate-like body (A) via an adhesive (C), the substrate integrally forms projections (5) which engage with edges of the respective through holes (1) around the entire peripheries thereof.

## Description

### Technical Field

The present invention relates to a vessel for biochemical use, including a plate-like body defining a plurality of through holes along a thickness thereof, and a substrate bonded to one face of the plate-like body via an adhesive.

### Background Art

In the biochemical vessel of the above-noted type (e.g. a microplate), by closing the respective through holes of the plate-like body with the substrate bonded to one face of the body, there are formed a plurality of sample receiving portions. Hence, such vessel is often employed in fields requiring culture, analysis or the like of a number samples, such as cell culture, DNA analysis, etc.

With the conventional biochemical vessel, one side of the plate-like body is bonded to a flat face of the substrate via an adhesive. When bonding the plate-like body to the substrate via the adhesive, if any excess unhardened adhesive enters the sample receiving portion and becomes hardens therein, this hardened adhesive may be dissolved into a culture solution, an analysis solution, etc, thereby to interfere with effective cell culture or precision analysis.

Further, in case the substrate is formed of an ultraviolet transparent glass (e.g. natural quartz glass, synthetic quartz glass, borosilicate glass, etc.) so as to allow spectrometry of sample by causing visible mean, ultraviolet beam, or X-ray beam to impinge on the bottom face of the sample receiving portion, such adhesive entered the sample receiving portion and hardened therein may prevent precision spectrometry.

In view of the above, conventionally, between adjacent through holes of the plate-like body, drain holes are formed through in advance in the bonding faces of the plate-like body and the substrate. Then, when unhardened adhesive in the form of liquid is applied to the bonding face of the plate-like body oriented upward and then the flat face of the substrate is placed on the bonding face applied with the adhesive, any excess unhardened adhesive is allowed to flow into the drain holes, thereby to prevent intrusion of unhardened adhesive into the sample receiving portions (see e.g. Patent Document 1).

Patent Document 1: Japanese Patent Application "Kokai" No. 2002-125656.

With the conventional biochemical vessel described above, since the drain holes are formed through the portions of the plate-like body between adjacent through holes thereof, any excess unhardened adhesive can easily flow into the drain holes. This construction cannot yet effectively prevent flowing of unhardened adhesive into the sample receiving portions in that the excess unhardened adhesive can easily flow into the sample receiving portions, so that effective cell culture or precision analysis can still be hindered thereby.

In addition, in case it is necessary to provide the bottom of the sample receiving portion with optical transparency, a substrate having light transparent bottom will be fixedly bonded to one face of the plate-like body having a plurality of through holes. Hence, if the substrate is formed in a mold, in order to increase the light transmittance, it is needed to polish the inner face of the bottom of each sample receiving portion. However, it is difficult to efficiently polish only such portion corresponding to each sample receiving portion of the substrate.

The present invention has been made in view of the above-described state of the art. An object of the invention is to provide a biochemical vessel suitable for effective cell culture, precision analysis, etc, and also to facilitate efficient polishing of the inner face of the bottom of each sample receiving portion in case the bottom of the sample receiving portion needs to have optical transparency.

### Disclosure of the Invention

According to the first characterizing feature of the present invention, a biochemical vessel comprising a plate-like body defining a plurality of through holes along a thickness thereof, and a substrate bonded to one face of the plate-like body via an adhesive, characterized in that said substrate integrally forms projections which engage with edges of the respective through holes around the entire peripheries thereof.

With the above, with the engagement of the projections formed integrally on the substrate with the edges of the plurality of through holes along the entire peripheries thereof, the one face of the plate-like body defining the through holes is bonded to the substrate with adhesive. Hence, when the plate-like body and the substrate are bonded to each other via the adhesive, the edges of the through holes are closed by the projections engaging with these edges. Therefore, it is possible to effectively prevent intrusion of excess unhardened adhesive into the sample receiving portions. Further, as there hardly exists the risk of intrusion and subsequent hardening of the unhardened adhesive in the sample receiving portions, it has become possible to provide a biochemical vessel suitable for effective cell culture, precision analysis, etc.

Moreover, as the projections for engaging with the edges of the through holes along the entire peripheries thereof are formed integrally on the substrate, in applying the unhardened adhesive, the substrate will be held with its bonding face oriented upward so that the projections may project upwardly from the bonding face of the substrate to be bonded to the plate-like body and under this condition, the unhardened adhesive can be applied to the bonding face of the substrate. With this, the unhardened adhesive can be easily applied so as not to go beyond the bonding area. As a result, the intrusion of unhardened adhesive into the sample receiving portions can be effectively avoided, thus further reducing the risk of intrusion and subsequent hardening of unhardened adhesive into the sample receiving portions. Therefore, it has become possible to provide a biochemical vessel suitable for effective cell culture, precision analysis, etc.

Furthermore, as the inner face of the bottom of the sample receiving portion is constituted by the top surface of the projection formed integrally on the substrate, when it is needed to provide the bottom of the sample receiving portion with light transmittance, the top surface of the projection alone can be readily polished, prior to the bonding of the plate-like body to the substrate. Thus, it is readily possible to polish efficiently the inner face of the bottom of each sample receiving portion as a small polishing area.

According to the second characterizing feature of the present invention, a cavity is formed at least in one of the bonding face of the plate-like body and the bonding face of the substrate, thereby to form a gap between the plate-like body and the substrate.

With the above, when the plate-like body and the substrate are bonded to each other via the adhesive, excess unhardened adhesive can readily flow into the gap formed between the plate-like body and the substrate. As a result, the plate-like body and the substrate can be readily bonded firmly to each other, while preventing intrusion of unhardened adhesive into the sample receiving portions. Hence, it is possible to provide a biochemical vessel having high durability.

According to the third characterizing feature of the invention, said cavity is formed as an annulus surrounding an area where the plurality of through holes are formed.

As the cavity is formed as an annulus surrounding an area where the plurality of through holes are formed, even if excess unhardened adhesive flows into the gap between the plate-like body and the substrate, there hardly exists the risk of such adhesive flowing beyond the lateral faces of the biochemical vessel from the bonded faces of the plate-like body and the substrate. Accordingly, it becomes easy to ensure dimension precision in the biochemical vessel. Therefore, it is possible to increase handling precision of the vessel by an automatic determining device such as e.g. the microplate reader.

### Brief Description of the Drawings

Fig. 1 is a partially cutaway perspective view of a biochemical vessel,
Fig. 2 is an enlarged section view of principal portions,
Fig. 3 is an explanatory view of a manufacturing method,
Fig. 4 is a partially cutaway perspective view of a biochemical vessel according to a second embodiment,
Fig. 5 is an enlarged section view of principal portions,
Fig. 6 (a) is a plan view of the biochemical vessel according to the second embodiment, Fig. 6 (b) being a perspective view showing a bottom face of principal portions of the second embodiment, and
Fig. 7 is an enlarged section view of principal portions of a third embodiment.

### Best Mode of Embodying the Invention

Next, embodiments of the present invention will be described with reference to the accompanying drawings.

### [First Embodiment]

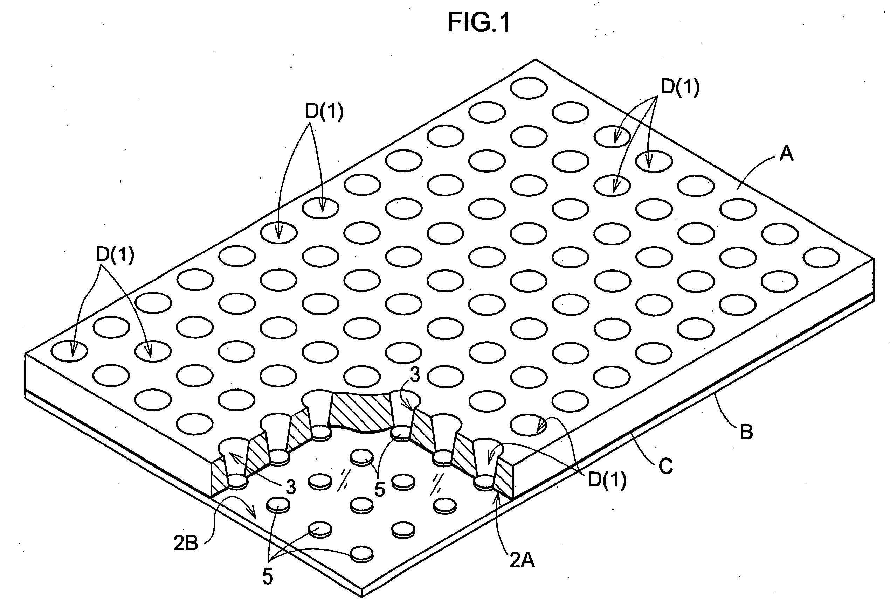

Figs. 1-3 show a biochemical vessel constructed such that one face of a plate-like body A defining a plurality of through holes 1 extending through the thickness thereof is boned to a rectangular glass substrate B via an adhesive C so as to close one side of each through hole 1 with the glass substrate B, thus forming a plurality of sample receiving portions (cells) D having light transparent bottoms.

The plate-like body A is formed of an inorganic material such as various glass materials, e.g. soda lime glass, various ceramic materials, various metals etc. to be substantially same dimensions, in plan view, as the glass substrate B, with the plurality of through holes 1 being defined through the thickness thereof. Instead, the plate-like body can be formed of any of various types of synthetic resins having ultraviolet transparency, such as polystyrene resin.

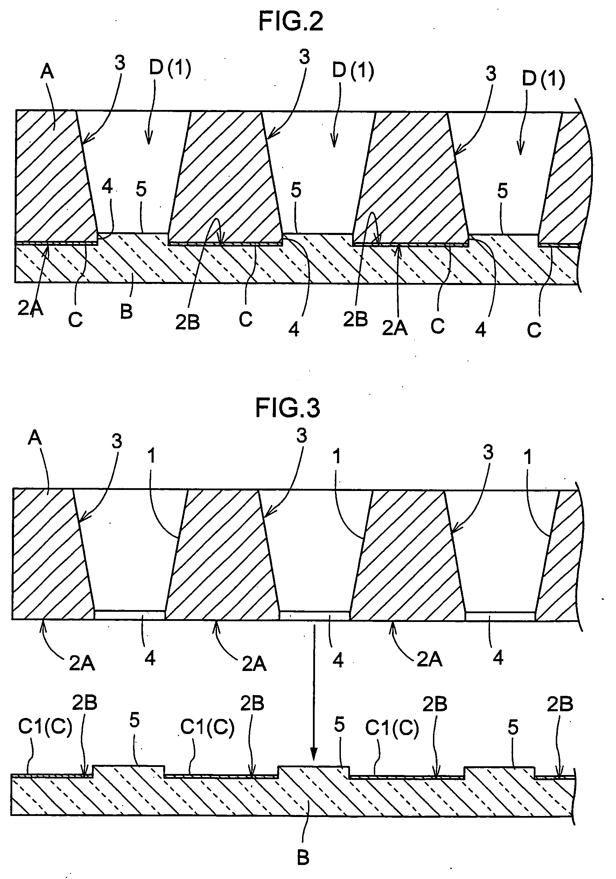

Each through hole 1, as shown in Fig. 2, includes a tapered inner peripheral face 3 in the form of a truncated cone tapered toward a bonding face 2A to be bonded to the glass substrate B, and a cylindrical inner peripheral face 4 of a substantially fixed inner diameter and extending continuously to the edge of the bonding face 2A of the tapered inner peripheral face 3.

The glass substrate B is formed of a glass having ultraviolet transparency suitable for ultraviolet spectrometry, having a high ultraviolet transmittance of 80% or more, such as natural quartz glass, synthetic quartz glass, borosilicate glass, etc. A bonding face 2B of the substrate to be bonded to the plate-like body A integrally forms a number of projections 5 which engage with the cylindrical inner peripheral faces 4 of the respective through holes 1 around the entire peripheries thereof. Then, as these projections 5 are caused to engage with the cylindrical inner peripheral faces 4 of the respective through holes 1 around the entire peripheries thereof, the one face of the plate-like body A is bonded to the glass substrate B via the adhesive C.

Each projection 5 is formed like a column which has a substantially same outer diameter as the inner diameter of the cylindrical inner peripheral face 4 and also has a substantially same height as the length of the cylindrical inner peripheral face 4.

Incidentally, the glass substrate B can be formed of an ultraviolet transparent glass (e.g. PH160 available from Phillips Inc.) having a very high transmission factor of 85% or more for ultraviolet beam of 230 nm ~ 300 nm, thus very suitable for ultraviolet spectrometry.

The adhesive C employed comprises an inorganic adhesive such as a low-melting point glass, a metal solder, etc. Hence, this is advantageous in that the adhesive C will not be dissolved into an organic solvent (e.g. isooctane) which may be received in the sample receiving portion D for the purpose of e.g. genetic analysis. Instead, however, an organic adhesive can also be employed.

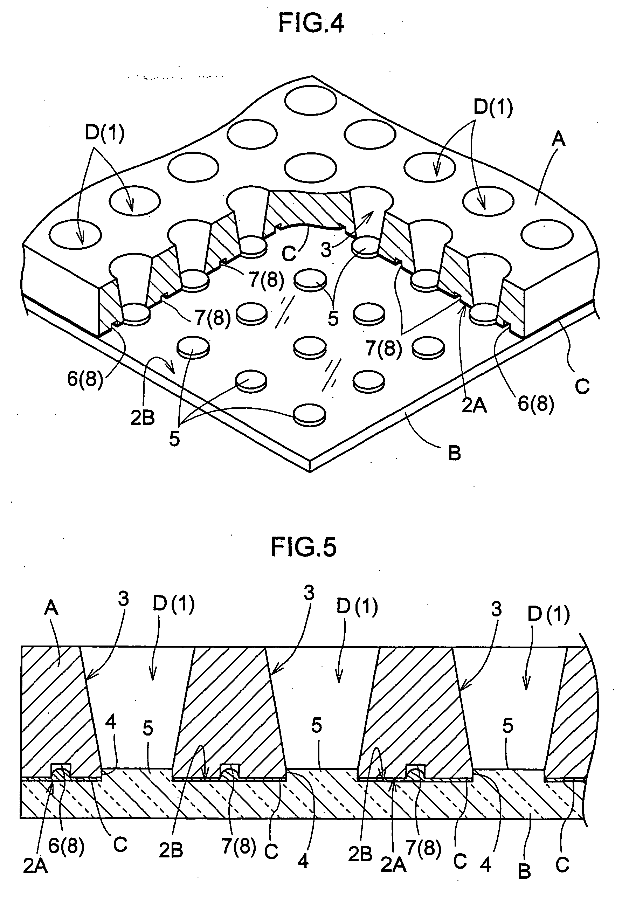

Referring to a manufacturing method of the biochemical vessel described above, the top surfaces of the projections 5 of the glass substrate B will be polished in advance. Then, as shown in Fig. 3, this glass substrate B will be held with its bonding face 2B oriented upward and to this bonding face 2B, unhardened adhesive C1 (C) in the form of liquid will be applied. Thereafter, the plate-like body A will be placed over the glass substrate B in such a manner that the cylindrical inner peripheral faces 4 of the respective through holes 1 may engage the respective projections 5, then allowing the unhardened adhesive C1 to harden. With this, the plate-like body A and the glass substrate B will be bonded to each other, as illustrated in Fig. 2.

As described above, when the unhardened adhesive C1 in the form of liquid is applied to the bonding face 2B, the bonding face 2B of the glass substrate B is kept oriented upward. This reduces the risk of any unhardened adhesive C1 flowing to the top of the projection 5 constituting the bottom of each sample receiving portion D. And, just a necessary amount of unhardened adhesive C1 can be readily applied to the bonding face 2B. Further, when the plate-like body A is placed over the glass substrate B, the lower end of each through hole 1 is closed by the projection 5. Hence, intrusion of excess unhardened adhesive C1 into the sample receiving portion D can be effectively prevented.

### [Second Embodiment]

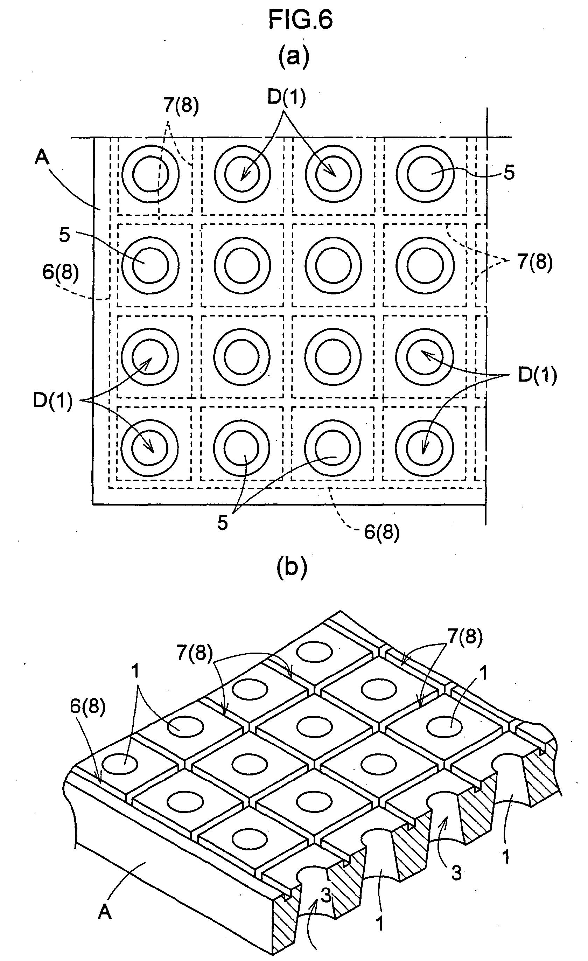

Figs. 4 through 6 show a further embodiment of the biochemical vessel. In this, of the bonding faces 2A, 2B of the plate-like body A and the glass substrate B, the bonding face on the side of the plate-like body A defines, along the outer peripheral edge of the plate-like body A, an annular cavity 6 in the form of a groove surrounding the area where the plurality of through holes 1 are formed. Further, a grating-like cavity 7 surrounding each through hole 1 like a grating is formed in such a manner that ends of the cavity 7 converge and communicate with the annular cavity 6. With these, between the plate-like body A and the glass substrate B, there is formed a gap 8 communicating continuously.

Therefore, when the plate-like body A and the glass substrate B are bonded to each other via the adhesive C, any excess unhardened adhesive C1 (C) can readily flow into the gap 8. As a result, the plate-like body A and the glass substrate B can be readily bonded firmly to each other, while preventing intrusion of unhardened adhesive C1 into the sample receiving portions. Further, there hardly exists the risk of such unhardened adhesive C1 flowing beyond the lateral faces of the biochemical vessel from the bonded faces 2A, 2B of the plate-like body A and the glass substrate B. Accordingly, the dimensional precision of the biochemical vessel can be ensured easily.

Incidentally, the annular cavity 6 and the grating-like cavity 7 can be formed n the bonding face 2B of the glass substrate B to be bonded to the bonding face 2A of the plate-like body A. Or, these cavities may be formed in both of these bonding faces 2A, 2B. Further, a cavity 6 forming each through hole 1 in the form of an annulus can be formed in at least one of the bonding faces 2A, 2B of the plate-like body A and the glass substrate B.

The rest of the construction is identical to that of the first embodiment.

### [Third Embodiment]

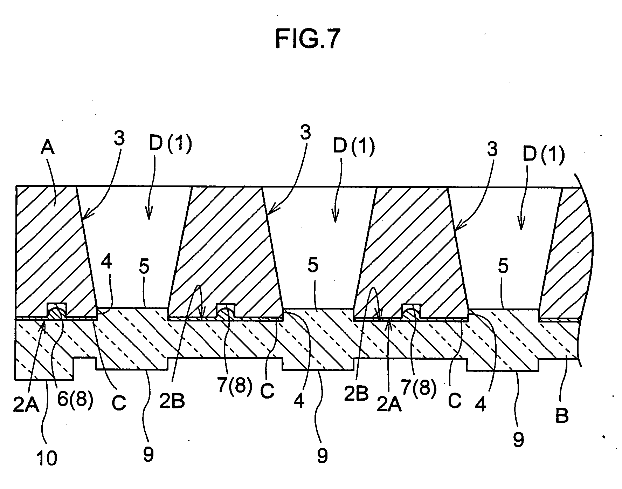

Fig. 7 shows a still further embodiment of the biochemical vessel. In this, in the opposite face of the glass substrate B away from its bonding face 2B to be bonded to the plate-like body A, there are integrally formed a plurality of convex face portions 9 in the form of columns, at positions corresponding to the portions where the respective projections 5 are formed, so that top surfaces of the convex face portions 9 constitute outer faces of the bottoms of the sample receiving portions D. With this, in addition to the inner faces of the bottoms of the sample receiving portions D, the outer faces of their bottoms too can be polished in an efficient manner as small limited areas to be polished.

Further, along a lower outer peripheral portion of the glass substrate B, there is integrally formed a spacer 10 in the form of an annulus projecting downwardly of the convex face portions 9, thereby to prevent damage to the outer faces of the bottoms of the sample receiving portions D.

The rest of the construction is identical to that of the first embodiment.

### [Other Embodiments]

1. In the biochemical vessel according to the present invention, a ring-like projection engaging the edge of the through hole along the entire periphery thereof may be formed integrally on the substrate.
2. In the biochemical vessel of the invention defined in claim 2, at least one of the bonding faces of the plate-like body and the substrate can define an intermittent cavity, thus forming an intermittent cavity between the plate-like body and the substrate.
3. In the biochemical vessel of the invention defined in claim 2, at least one of the bonding faces of the plate-like body and the substrate can device a cavity extending to the edge of the bonding face, so as to form, between the plate-like body and the substrate, a gap open to the lateral face of the biochemical vessel.

### Industrial Applicability

The invention may be employed in fields requiring culture, analysis or the like of a number samples, such as cell culture, DNA analysis, etc.

## Claims

1. A biochemical vessel comprising a plate-like body (A) defining a plurality of through holes (1) along a thickness thereof, and a substrate (B) bonded to one face of the plate-like body (A) via an adhesive (C),
**characterized in that**
said substrate integrally forms projections (5) which engage with edges of the respective through holes (1) around the entire peripheries thereof.

2. The biochemical vessel according to claim 1, **characterized in that** a cavity (6, 7) is formed at least in one of the bonding face of the plate-like body (A) and the bonding face of the substrate (B), thereby to form a gap (8) between the plate-like body (A) and the substrate (B).

3. The biochemical vessel according to claim 2, **characterized in that** said cavity (6, 7) is formed as an annulus surrounding an area where the plurality of through holes (1) are formed.
